# EUROPÄISCHE PATENTSCHRIFT

(11) **EP 2 186 043 B1**
(45) Veröffentlichungstag und Bekanntmachung des Hinweises auf die Patenterteilung: **14.05.2014**
(21) Anmeldenummer: 08801876.7
(22) Anmeldetag: 05.09.2008
(51) Int. Cl.: G06K 19/077

(54) **TRANSPORT- UND LAGEREINHEIT MIT IDENTIFIKATIONSEINHEIT UND LESEEINHEIT**
TRANSPORT AND STORAGE UNIT HAVING AN IDENTIFICATION UNIT AND A READING UNIT
UNITÉ DE TRANSPORT ET DE STOCKAGE À UNITÉ D'IDENTIFICATION ET UNITÉ DE LECTURE

(30) Priorität: 07.09.2007 DE 102007044560
(43) Veröffentlichungstag der Anmeldung: 19.05.2010
(73) Patentinhaber: Schaarschmidt, Erich, 84152 Mangkofen (DE)
(72) Erfinder: Scharschmidt, Erich, 84152 Mangkofen (DE)
(74) Vertreter: Bressel, Burkhard
(86) Internationale Anmeldenummer: PCT/EP2008/007283
(87) Internationale Veröffentlichungsnummer: WO 2009/033613

(56) Entgegenhaltungen:
- GB-A- 2 360 422
- US-A1- 2003 117 268

## Beschreibung

Die Erfindung betrifft eine Transport- und Lagereinheit mit einer Identifikationseinheit zur Kennzeichnung und Identifizierung von Waren oder anderen Gegenständen, die in einer Vielzahl auf Paletten oder ähnlichen Transporthilfsmitteln in so genannten Pulks oder Gebinden anordbar, transportierbar und/oder lagerbar und/oder umschlagbar sind. Die Transport- oder Lagereinheit besteht dabei bevorzugt aus einem Stahl- oder überwiegend metallischen Behälter, insbesondere aus einem Fass mit einem metallischen Grundkörper. Die Transport- oder Lagereinheit kann aber auch aus einem nichtmetallischen Material wie Glas, Karton oder Kunststoff bestehen.

Es ist bereits bekannt, im Bereich der Logistik zur Kennzeichnung und Identifizierung von Waren so genannte Transponder einzusetzen. Dabei handelt es sich um Kommunikationseinheiten, die in der Lage sind, mit einer Leseeinrichtung zu kommunizieren. Die Kommunikation erfolgt dabei drahtlos und findet mittels Hochfrequenz- oder Funksignalen statt. Für Identifikationszwecke werden dazu insbesondere so genannte RFID-Transponder und damit kommunizierende RFID-Leseeinheiten eingesetzt. Die Transponder können eine hohe Speicherkapazität in so genannter Weitbereichsausführung und einer Leseentfernung von mehreren Metern besitzen.

Aus dem Stand der Technik ist eine Vielzahl von Lösungen bekannt, die sich mit der Anordnung von derartigen Transpondern auf den verschiedensten Transporteinheiten befassen. Aus der DE 298 21 877 U1 ist ein industrieller fassartiger Verpackungsbehälter mit dünner Wandung bekannt, der zur Aufnahme eines empfindlichen stabförmigen Transponders eine besondere Halterung bzw. separate Schutzvorrichtung aufweist, die im Bereich einer vertikal verlaufenden Seitenwandung des Behälters auf der Oberfläche der Behälterwandung befestigt ist. Dazu ist insbesondere eine entsprechende Ein- bzw. Ausformung vorgesehen, in welche der Transponder mittels einer Halterung bzw. Schutzvorrichtung eingesetzt ist. Aus der DE 202 14 099 U1 ist ein Getränkebehälter bekannt, der einen Transponder zum Emittieren von Radiofrequenz-Signalen (RF) aufweist. Der Transponder ist dabei bevorzugt am jeweiligen Getränkebehälter angeklebt, in dessen Grundwerkstoff oder in ein mit dem Behälter (ir-) reversibel verbundenes Teil eingegossen, ein- oder aufgepresst oder auf den Behälter aufgeschraubt oder aber einfach an den Behälter angehängt. In der DE 10 2006 026 014 A1 wird eine Anordnung mit einem Transponder und einem dem Transponder zugeordneten metallischen Bauteil offenbart. Mit dieser Anordnung soll insbesondere das Problem der Anordnung des Transponders in oder an metallischen Bauteilen gelöst werden, da metallische Werkstoffe die Funktion des Transponders erheblich beeinflussen können. Metallische Werkstoffe können nämlich zumindest einen Teil der elektromagnetischen Energie aus den zu empfangenen oder zu sendenden elektromagnetischen Signalen absorbieren, so dass die Kommunikation zwischen dem Transponder und der davon getrennt angeordneten Leseeinheit unterdrückt wird. Es wird weiter ausgeführt, dass zur Lösung des Problems bereits vorgeschlagen wurde, den Transponder oder zumindest seine Antenne so zu befestigen, dass ein maximaler Abstand zwischen dem metallischen Behälter und der Antenne vorhanden ist. Dies wird durch einen sehr dicken Haftfilm erreicht. Die damit erreichten Ergebnisse werden jedoch als nicht zufriedenstellend beschrieben. Deshalb wird in der dortigen Lehre vorgeschlagen, mittels einer Vertiefung im metallischen Bauteil eine Antenne für den Transponder zu bilden. Der Transponder selbst ist dabei direkt am metallischen Bauteil befestigt, wobei der Transponder die Vertiefung im Metallbehälter zumindest teilweise überdeckt. Der Transponder kann aber auch selber zumindest teilweise in der Vertiefung angeordnet sein.

Eine Identifizierung der Behälter ist meist nur durch eine Vereinzelung der Behälter möglich, da die daran angeordneten Behälter entweder nicht in die Richtung der Leseeinheit zeigen oder von anderen metallischen Behältern verdeckt werden, wodurch die elektromagnetische Energie aus den zu empfangenen oder zu sendenden elektromagnetischen Signalen ebenfalls absorbiert werden kann. Das gleiche Problem tritt auf, wenn in Behältern aus Glas oder aus Kunststoffen Flüssigkeiten transportiert werden, da die Flüssigkeiten ebenfalls die Strahlung absorbieren.

GB 2 360 422 A offenbart ein Transport- und Lagereinheit mit Transponder-Identifikationseinheit mit einem einzigen Transponder.

Mit dem aus dem Stand der Technik bekannten Lehren ist es nur unzureichend oder gar nicht möglich, die in einer Vielzahl von in Pulks oder Gebinden angeordneten Transportbehältern, insbesondere aus Stahl oder anderen metallischen Werkstoffen, zu identifizieren. Eine so genannte Pulklesbarkeit ist mit den bekannten Anordnungen nicht realisierbar, da die Transponder jeweils nur an einer Stelle an den betreffenden Behältern angeordnet sind, die bei einer Anordnung in Pulks entweder von anderen Behältern verdeckt werden oder aber so im Pulk angeordnet sind, dass die Transponder nicht in die Richtung der stationären Leseeinheit zeigen, so dass die metallischen Werkstoffe oder auch in den Behältern aus nichtmetallischen Werkstoffen eingelagerte Flüssigkeiten zumindest einen Teil der elektromagnetischen Energie aus den zu empfangenen oder zu sendenden elektromagnetischen Signalen absorbieren, wobei die Kommunikation zwischen dem Transponder und der davon getrennt angeordneten Leseeinheit unterdrückt wird.

Die Aufgabe der vorliegenden Erfindung besteht deshalb darin, die o.g. Nachteile derartiger Anordnungen in Bezug auf die Pulklesbarkeit zu überwinden und eine großtechnische Anwendbarkeit derartiger Identifikationssysteme für Behälter im Transport- und Logistikbereich zur Verfügung zu stellen.
Erfindungsgemäß wird diese Aufgabe durch die Merkmale des Anspruchs 1 gelöst. Vorteilhafte Ausbildungen der Erfindung sind in den zugehörigen Ansprüchen enthalten.

Demnach beinhaltet die Erfindung eine Transport- und Lagereinheit mit einer Transponder-Identifikationseinheit zur Kennzeichnung und Identifizierung von Waren oder anderen Gegenständen, die in einer Vielzahl auf Paletten oder ähnlichen Transporthilfsmitteln in so genannten Pulks oder Gebinden anordbar, transportierbar und/oder lagerbar und/oder umschlagbar sind, wobei mehrere voneinander beabstandete Transponder in der Transponder-Identifikationseinheit eingebettet sind und die Transponder-Identifikationseinheit den Umfang der Transport- und Lagereinheit umgibt.

Vorteilhaft sind dabei mindestens vier, vorzugsweise jedoch fünf bis sechs, Transponder voneinander beabstandet in der Transponder-Identifikationseinheit eingebettet, wobei die Transponder jeweils die gleichen Identifikationsdaten aufweisen. In einer bevorzugten Ausführung der Erfindung umspannt die Transponder-Identifikationseinheit die Transport- und Lagereinheit dabei ringförmig und nahezu horizontal. Nach einer weiteren Ausführung kann die Transponder-Identifikationseinheit dabei mittig der Transport- und Lagereinheit angeordnet sein.

Nach einer weiteren Ausführung der Erfindung ist vorgesehen, dass die Transport-und Lagereinheit vorzugsweise zwei Roll- und/oder Zentrierringe aufweist, wobei die die Transponder-Identifikationseinheit als dritter Ring zwischen den Roll- und Zentrierringen angeordnet ist.

Es ist aber alternativ auch vorsehbar, dass die Transport- und Lagereinheit zwei Roll- und Zentrierringe aufweist, wobei wenigstens einer der Roll- und Zentrierringe selbst als Transponder-Identifikationseinheit ausgebildet ist.

Vorteilhaft sind die Transponder durch die Transponder-Identifikationseinheit vor äußeren mechanischen Einflüssen schützbar und vom Grundkörper der Transport-und Lagereinheit beabstandbar.

Bei Anordnung einer Vielzahl von Transport- und Lagereinheiten auf einer Palette oder ähnlichen Transporthilfsmitteln werden diese vorteilhaft durch die Transponder-Identifikationseinheiten mechanisch auf Abstand gehalten. Vorteilhaft entsteht dadurch eine Art "Funklücke", so dass auch die Signale von benachbarten oder weiter hinten platzierten Einheiten zur Leseeinheit gelangen können.
Durch die erfindungsgemäße Anordnung wird erstmalig eine Pulklesefähigkeit mittels RFID-Technologie, insbesondere von Transporteinheiten aus Stahl oder anderen metallischen Werkstoffen und/oder im Verbund mit anderen Werkstoffen, ermöglicht. Insbesondere wird durch die Erfindung das gleichzeitige Lesen oder Identifizieren von auf einer Palette angeordneten Transporteinheiten realisiert, ohne dass diese dabei vereinzelt werden müssen. Die Identifikationseinheit enthält dabei die in einem definierten Abstand positionierten Transponder, die so eine optimale Wirkung entfalten können. Die Transport- und Lagereinheiten können dabei eine beliebige geometrische Form aufweisen. Vorteilhaft sind insbesondere auch die leichte und schnelle Anbringung der Transponder-Identifikationseinheit an den Transport- und Lagereinheiten sowie die einfache Nachrüstbarkeit.

Um die für das Pulklesen erforderliche Funk-Reichweite zu gewährleisten, wird derzeit der UHF-Bereich als bevorzugt angesehen. Andere Frequenzbereiche sind deshalb nicht ausgeschlossen.

Nach einer weiteren Ausführung der Erfindung sind die Transponder als aktive Transponder ausgebildet, wodurch die Funk-Reichweite noch verbessert werden kann.

Aktive Systeme verfügen im Gegensatz zu passiven Transpondern (eigenenergielos) über eine Energieversorgung (z.B. in Form einer Batterie). Dadurch sind mit aktiven Transpondern nicht nur größere Kommunikationsreichweiten möglich, auch die Verwaltung größerer Datenspeicher bzw. der Betrieb integrierter Sensorik wird realisierbar.

Nachfolgend soll die Erfindung anhand von in den Zeichnungen dargestellten Ausführungsbeispielen näher erläutert werden. Es zeigen
- Fig. 1: eine Transport- und Lagereinheit in Form eines mit Polyurethan ummantelten Fasses,
- Fig. 2: eine Transport- und Lagereinheit in Form eines Stahlfasses,
- Fig. 3: eine Transponder-Identifikationseinheit,
- Fig. 4: eine Schnittdarstellung A - A durch eine Transponder-Identifikationseinheit nach Fig. 3,
- Fig. 5: eine Draufsicht auf eine Leseeinheit mit einer Vielzahl von auf einer Doppel-Palette angeordneten Transport- und Lagereinheiten,
- Fig. 6: eine Leseeinheit.

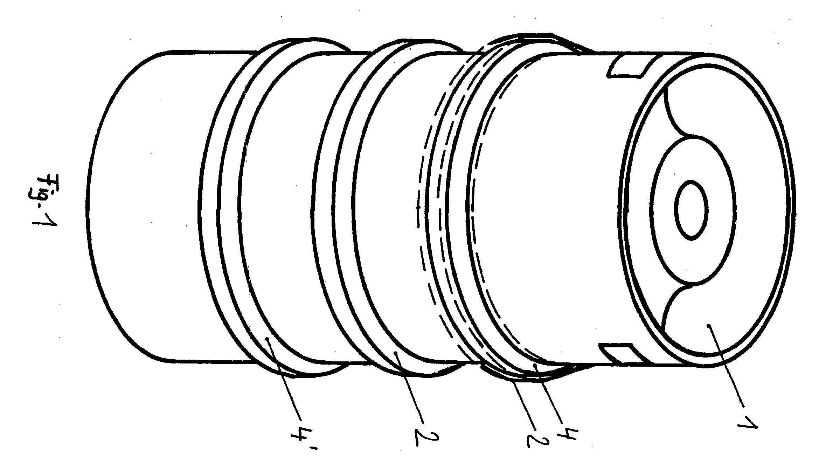

In der Fig. 1 ist ein mit Polyurethan ummanteltes Fass (PU - Fass) als Transport- und Lagereinheit 1 dargestellt. Das PU - Fass weist zwei Roll- und/oder Zentrierringe (4, 4') auf, wobei die Transponder-Identifikationseinheit (2) als dritter Ring zwischen den Roll- und Zentrierringen (4, 4') angeordnet ist. Die Transponder-Identifikationseinheit (2) ist dabei als Träger der RFID-Transponder (3) ausgebildet. Alternativ (gestrichelte Darstellung) ist es bei PU-Fässern auch möglich, dass einer der Roll- und Zentrierringe (4, 4') als Transponder-Identifikationseinheit (2) ausgebildet ist. Dabei wird einer der Roll- und Zentrierringe (4) als Grundträger verwendet, wobei auf diesen Ring ein dünner Mantel aufgebracht wird, der die Transponder-Identifikationseinheit (2) bildet.

Um die für das Pulklesen erforderliche Funk-Reichweite zu gewährleisten, wird derzeit der UHF-Bereich als bevorzugt angesehen. Andere Frequenzbereiche sind deshalb nicht ausgeschlossen.

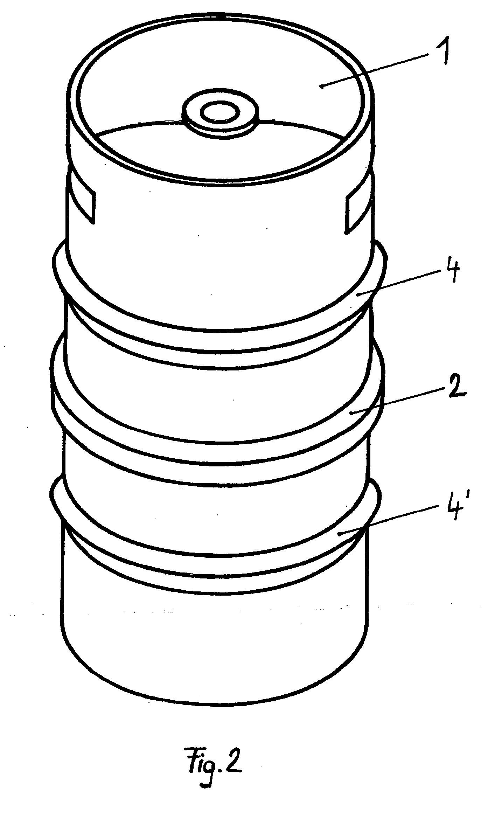

In der Fig. 2 ist ein Stahlfass mit einer Transponder-Identifikationseinheit (2) dargestellt, die das Fass 1 ringförmig umschließt.

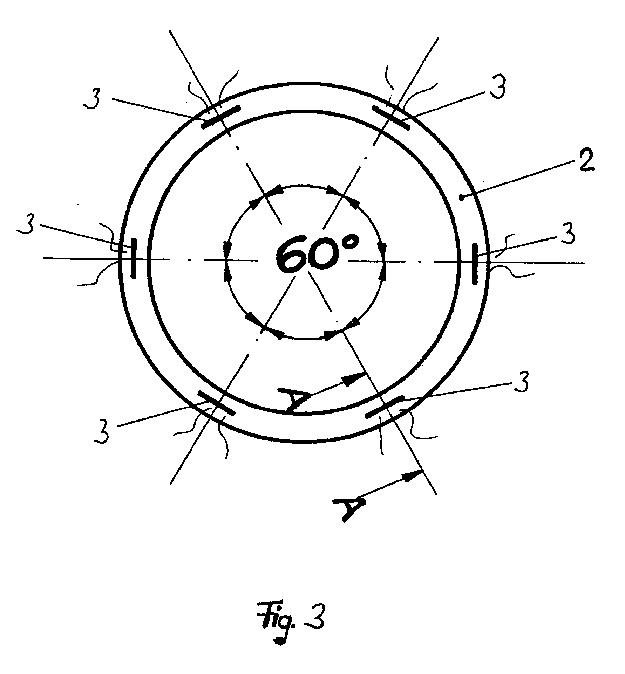

In der Fig. 3 wird der Aufbau einer Transponder-Identifikationseinheit 2 in einer Draufsicht gezeigt. Die Transponder-Identifikationseinheit 2 ist ringförmig ausgebildet und besteht vorzugsweise aus Kunststoff oder Gummi. Eingebettet in die Transponder-Identifikationseinheit sind sechs voneinander im Winkel von 60° beabstandete RFID-Transponder 3. Es ist natürlich auch möglich, dass die Transport- und Lagereinheit 1 z.B. als Kanister oder ähnlicher quaderförmiger Behälter ausgebildet ist, wobei dann die Transponder-Identifikationseinheit 2 auch vertikal angeordnet sein kann.

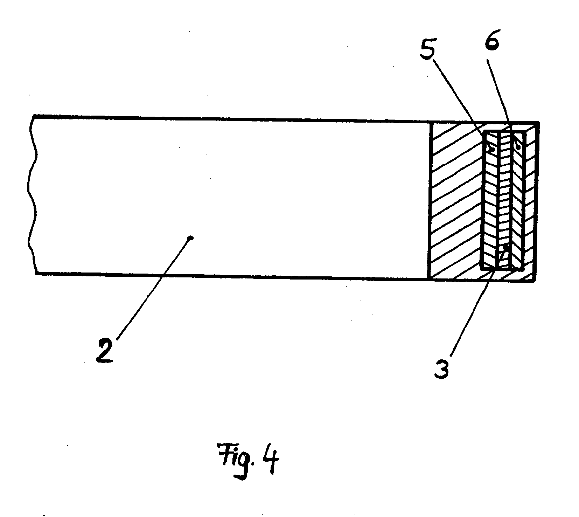

Die Fig. 4 zeigt einen Schnitt A - A durch die Transponder-Identifikationseinheit 2 nach Fig. 3. Die RFID-Transponder 3 sind dabei in die Transponder-Identifikationseinheit 2 eingebettet. Die RFID-Transponder 3 können durch eine Schutzplatte 6 vor äußeren mechanischen Einflüssen (Stürze, Stöße) geschützt werden. Außerdem können die RFID-Transponder 3 auf der behälternahen Seite mit einer Abschirmfolie 5 versehen sein. Dadurch kann u.U. die Lesereichweite optimiert werden.

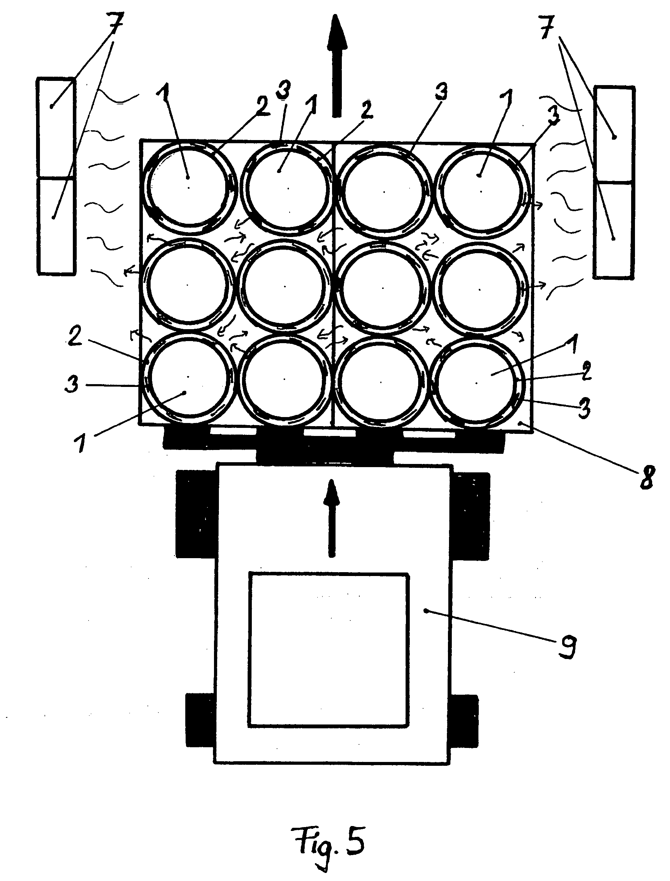

In der Fig. 5 ist eine Draufsicht auf eine beispielhafte Leseeinheit 7 mit einer Vielzahl von auf einer Doppel-Palette 8 angeordneten Transport- und Lagereinheiten 1 in

Form von Fässern und einer Stapel- oder Fördereinrichtung 9 dargestellt. Die Leseeinheit 7 ist dabei beidseitig der Palette 8 vorgesehen. Die Fässer 1 sind dabei in mehreren Lagen auf der Palette 8 angeordnet. Jedes Fass 1 ist mit einer Transponder-Identifikationseinheit 2 versehen. Die Transponder-Identifikationseinheit 2 weist hier sechs über den Fassumfang verteilte Transponder 3 auf, wobei jeder Transponder 3 die gleichen Identifikationsdaten aufweist. In der Zeichnung sind nicht alle Fässer mit Bezugszeichen versehen. Jedes Fass weist aber eine Transponder-Identifikationseinheit 2 mit über den Fassumfang verteilten Transpondern 3 auf.

Die Transponder-Identifikationseinheiten 2 beabstanden die auf der Palette 8 angeordneten Fässer 1 derart voneinander, das durch die dadurch entstehenden "Funklücken" die Signale auch wirklich zu allen Fässern gelangen können.

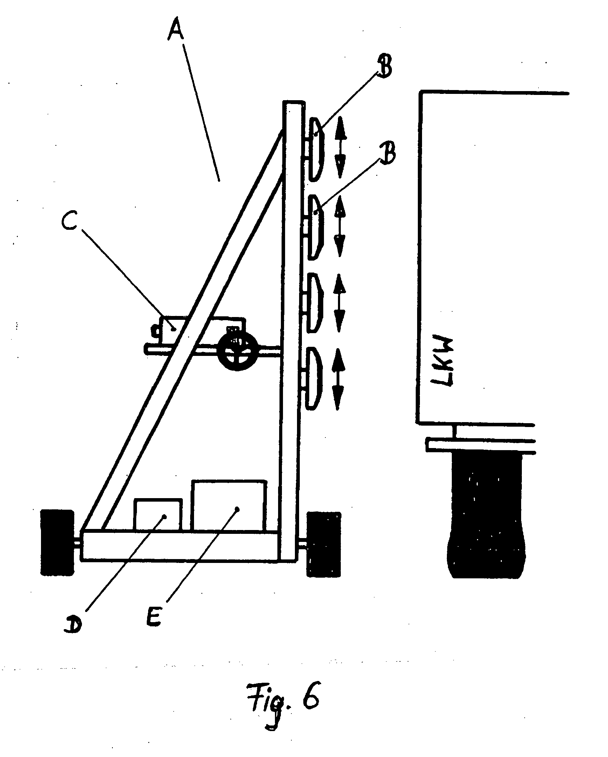

In der Fig. 6 ist eine derartige Leseeinheit dargestellt. Die Leseeinheit ist zur Erfassung einer Vielzahl von auf einem Transportmittel, insbesondere einem LKW und vorzugsweise auf Platten angeordneten Transport- und Lagereinheiten, die mit einer erfindungsgemäßen Identifikationseinheit versehen sind, einsetzbar. Die Leseeinheit ist als ein turmartiges Portal (A) ausgebildet, mit welchem die Höhe des Transportmittels abdeckbar ist, wobei das Portal (A) mobil ausgebildet ist und mindestens eine RFID-Lese- und Empfangseinheit (B) aufweist. Die RFID-Lese- und Empfangseinheiten (B) sind vertikal verstellbar ausgebildet. Weiter sind ein Bildschirm zur Darstellung der Leseergebnisse sowie eine Reader-Steuerungseinheit (C) vorgesehen. Mit E ist die Stromversorgung des kompletten Systems bezeichnet und mit D der hier vorgesehene elektrische Antrieb. Das Portal ist manuell oder elektrisch auf LKW-Lädehöhe einstellbar. Das Portal ist mit Rädern ausgestattet und kann zur Erfassung der Identifikationsdaten um das Tränsportmittel (LKW) herumgefahren werden. Dadurch können die Daten einer kompletten LKW-Ladung von Transport- und Lagereinheiten erfasst werden. Die logistischen Wege müssen somit nicht mit statischen Portalen ausgerüstet werden. Mit der Leseeinheit wird weiter sichergestellt, dass die Daten kompletter LKW-Ladungen vor einer Verschließung und/oder einem Abtransport eingelesen werden können, wobei sichergestellt wird, dass zum letztmöglichen Zeitpunkt der aktuelle Stand erfasst wird. Weiter kann die Ladung ankommender LKWs vor dem Abladebeginn erfasst werden.

## Patentansprüche

1. Transport- und Lagereinheit mit einer Transponder-Identifikationseinheit zur Kennzeichnung und Identifizierung von Waren oder anderen Gegenständen, die in einer Vielzahl auf Paletten oder ähnlichen Transporthilfsmitteln in so genannten Pulks oder Gebinden anordbar, transportierbar und/oder lagerbar und/oder umschlagbar sind, **dadurch gekennzeichnet, dass** mehrere voneinander beabstandete Transponder (3) in der Transponder-Identifikationseinheit (2) eingebettet sind, wobei die Transponder-Identifikationseinheit (2) den Umfang der Transport- und Lagereinheit (1) umgibt.

2. Transport- und Lagereinheit nach Anspruch 1, **dadurch gekennzeichnet, dass** mindestens vier, vorzugsweise jedoch fünf bis sechs, Transponder (3) voneinander beabstandet in der Transponder-Identifikationseinheit (2) eingebettet sind, wobei die Transponder (3) jeweils die gleichen Identifikationsdaten aufweisen.

3. Transport- und Lagereinheit nach den Ansprüchen 1 und 2, **dadurch gekennzeichnet, dass** die Transponder-Identifikationseinheit (2) die Transport- und Lagereinheit (1) ringförmig umspannt.

4. Transport- und Lagereinheit nach den Ansprüchen 1 bis 3, **dadurch gekennzeichnet, dass** die Transponder-Identifikationseinheit (2) mittig und nahezu horizontal der Transport- und Lagereinheit (1) angeordnet ist.

5. Transport- und Lagereinheit nach einem der o.g. Ansprüche, **dadurch gekennzeichnet, dass** die Transport- und Lagereinheit (1) zwei Roll- und/oder Zentrierringe (4, 4') aufweist, wobei die die Transponder-Identifikationseinheit (2) als dritter Ring zwischen den Roll- und Zentrierringen (4, 4') angeordnet ist.

6. Transport- und Lagereinheit nach einem der o.g. Ansprüche, **dadurch gekennzeichnet, dass** die Transport- und Lagereinheit (1) zwei Roll- und Zentrierringe (4, 4') aufweist, wobei wenigstens einer der Roll- und Zentrierringe (4, 4') als Transponder-Identifikationseinheit (2) ausgebildet ist.

7. Transport- und Lagereinheit nach einem der o.g. Ansprüche, **dadurch gekennzeichnet, dass** die Transponder (3) durch die Transponder-Identifikationseinheit (2) vor äußeren mechanischen Einflüssen schützbar und vom Grundkörper der Transport- und Lagereinheit (1) beabstandbar sind.

8. Transport- und Lagereinheit nach einem der o.g. Ansprüche, **dadurch gekennzeichnet, dass** die Transponder (3) mit einer Abschirmfolie (5) und/oder einer vor mechanischen Einflüssen schützenden Platte (6) versehen sind.

9. Transport- und Lagereinheit nach einem der o.g. Ansprüche, **dadurch gekennzeichnet, dass** die Transponder-Identifikationseinheit (2) die auf einer Palette oder ähnlichen Transporthilfsmitteln angeordneten Transport- und Lagereinheiten (1) zur Bildung einer Funklücke voneinander beabstandet.

10. Transport- und Lagereinheit nach einem der o.g. Ansprüche, **dadurch gekennzeichnet, dass** die Transponder-Identifikationseinheit (2) für den Empfang von Frequenzen im UHF-Bereich ausgebildet ist.

11. Transport- und Lagereinheit nach einem der o.g. Ansprüche, **dadurch gekennzeichnet, dass** die Transponder (3) als aktive Transponder ausgebildet sind.

## Claims

1. Transport and storage unit with a transponder identification unit for labelling and identifying goods or other items a multitude of which can be arranged, transported and/or stored and/or trans-shipped on pallets or similar transport aids in so-called bulk units or containers, **characterised in that** a plurality of transponders (3) spaced from each other are embedded in the transponder identification unit (2), wherein the transponder identification unit (2) surrounds the circumference of the transport and storage unit (1).

2. Transport and storage unit according to claim 1, **characterised in that** at least four, but preferably five to six, transponders (3), spaced from each other, are embedded in the transponder identification unit (2), wherein the transponders (3) each have the same identification data.

3. Transport and storage unit according to any one of claims 1 and 2, **characterised in that** the transponder identification unit (2) annularly encompasses the transport and storage unit (1).

4. Transport and storage unit according to any one of claims 1 to 3, **characterised in that** the transponder identification unit (2) is arranged centrally and nearly horizontally to the transport and storage unit (1).

5. Transport and storage unit according to any one of the preceding claims, **characterised in that** the transport and storage unit (1) has two rolling and/or centring rings (4, 4'), wherein the transponder identification unit (2) is arranged as a third ring between the rolling and centring rings (4, 4').

6. Transport and storage unit according to any one of the preceding claims, **characterised in that** the transport and storage unit (1) has two rolling and centring rings (4, 4'), wherein at least one of the rolling and centring rings (4, 4') is designed as a transponder identification unit (2).

7. Transport and storage unit according to any one of the preceding claims, **characterised in that** the transponders (3) can be protected by the transponder identification unit (2) from external mechanical influences and can be spaced from the base body of the transport and storage unit (1).

8. Transport and storage unit according to any one of the preceding claims, **characterised in that** the transponders (3) are equipped with a screening foil (5), and/or a plate (6) which protects from mechanical influences.

9. Transport and storage unit according to any one of the preceding claims, **characterised in that** the transponder identification unit (2) spaces the transport and storage units (1), which are arranged on a pallet or similar transport aids, from each other in order to form a radio gap.

10. Transport and storage unit according to any one of the preceding claims, **characterised in that** the transponder identification unit (2) is designed for the reception of frequencies in the UHF range.

11. Transport and storage unit according to any one of the preceding claims, **characterised in that** the transponders (3) are designed as active transponders.

## Revendications

1. Unité de transport et de stockage ayant une unité d'identification à transpondeurs permettant la caractérisation et l'identification de marchandises ou d'autres objets, qui peuvent être placés, transportés et/ou stockés et/ou transbordés en grand nombre dans desdits groupes ou paquets sur des palettes ou des moyens de transports analogues, **caractérisée en ce que** plusieurs transpondeurs (3) espacés les uns des autres sont intégrés dans l'unité d'identification à transpondeurs (2), l'unité d'identification à transpondeurs (2) entourant la circonférence de l'unité de transport et de stockage (1).

2. Unité de transport et de stockage selon la revendication 1, **caractérisée en ce qu'**au moins quatre, mais de préférence cinq à six, transpondeurs (3) sont intégrés espacés les uns des autres dans l'unité d'identification à transpondeurs (2), les transpondeurs (3) comportant chacun les mêmes données d'identification.

3. Unité de transport et de stockage selon les revendications 1 et 2, **caractérisée en ce que** l'unité d'identification à transpondeurs (2) forme un anneau entourant l'unité de transport et de stockage (1).

4. Unité de transport et de stockage selon les revendications 1 à 3, **caractérisée en ce que** l'unité d'identification à transpondeurs (2) est disposée au centre et pratiquement à l'horizontale de l'unité de transport et de stockage (1).

5. Unité de transport et de stockage selon l'une quelconque des revendications précédentes, **caractérisée en ce que** l'unité de transport et de stockage (1) comprend deux anneaux de roulement et/ou de centrage (4, 4'), l'unité d'identification à transpondeurs (2) étant disposée en tant que troisième anneau entre les anneaux de roulement et de centrage (4, 4').

6. Unité de transport et de stockage selon l'une quelconque des revendications précédentes, **caractérisée en ce que** l'unité de transport et de stockage (1) comprend deux anneaux de roulement et de centrage (4, 4'), au moins un des anneaux de roulement et de centrage (4, 4') étant conçu en tant qu'unité d'identification à transpondeurs (2).

7. Unité de transport et de stockage selon l'une quelconque des revendications précédentes, **caractérisée en ce que** les transpondeurs (3) peuvent être protégés par l'unité d'identification à transpondeurs (2) contre des influences mécaniques externes et peuvent être placés à une certaine distance du corps de base de l'unité de transport et de stockage (1).

8. Unité de transport et de stockage selon l'une quelconque des revendications précédentes, **caractérisée en ce que** les transpondeurs (3) sont dotés d'un film-écran (5) et/ou d'une plaque de protection contre des influences mécaniques (6).

9. Unité de transport et de stockage selon l'une quelconque des revendications précédentes, **caractérisée en ce que** l'unité d'identification à transpondeurs (2) maintient à une certaine distance les unes des autres les unités de transport et de stockage (1) disposées sur une palette ou sur des moyens de transport analogues afin de former un vide radioélectrique.

10. Unité de transport et de stockage selon l'une quelconque des revendications précédentes, **caractérisée en ce que** l'unité d'identification à transpondeurs (2) est conçue pour la réception de fréquences dans la bande UHF.

11. Unité de transport et de stockage selon l'une quelconque des revendications précédentes, **caractérisée en ce que** les transpondeurs (3) sont conçus en tant que transpondeurs actifs.
